# EUROPÄISCHE PATENTSCHRIFT

(11) **EP 4 647 725 B1**
(45) Veröffentlichungstag und Bekanntmachung des Hinweises auf die Patenterteilung: **22.07.2026**
(21) Anmeldenummer: 24174455.6
(22) Anmeldetag: 07.05.2024
(51) Int. Cl.: G01D 5/14

(54) **POSITIONSMESSEINRICHTUNG**
POSITION MEASURING DEVICE
DISPOSITIF DE MESURE DE POSITION

(43) Veröffentlichungstag der Anmeldung: 12.11.2025
(73) Patentinhaber: Dr. Johannes Heidenhain GmbH, 83301 Traunreut (DE)
(72) Erfinder: Schneider, Johannes, 83278 Traunstein (DE); Hilverkus, Johannes, 83250 Marquartstein (DE)

(56) Entgegenhaltungen:
- DE-A1- 102019 103 522
- DE-A1- 102019 113 908
- DE-A1- 102022 106 330
- US-A1- 2014 300 254

## Beschreibung

### GEBIET DER TECHNIK

Die Erfindung betrifft eine Positionsmesseinrichtung mit einem Domänenwandspeicher zur Speicherung von Umdrehungs- oder Positionsinformationen beispielsweise für eine Winkel- beziehungsweise Längenmesseinrichtung gemäß dem Anspruch 1.

Winkelmesseinrichtungen werden beispielsweise als Drehgeber zur Bestimmung der Winkellage zweier relativ zueinander drehbarer Maschinenteile verwendet. Häufig werden zu diesem Zweck so genannte Multi-Turn-Winkelmesseinrichtungen eingesetzt, durch die eine absolute Positionsbestimmung über viele Umdrehungen hinweg möglich ist.

Darüber hinaus sind Längenmesseinrichtungen bekannt, bei denen eine lineare Verschiebung zweier relativ zueinander verschiebbarer Maschinenteile gemessen wird. Insbesondere bei Längenmesseinrichtungen mit vergleichsweise großer Messlänge werden oft mehrere Linearmaßstäbe oder identische Skalen in Messrichtung aneinandergereiht. Bei derartigen Längenmesseinrichtungen soll eine absolute Positionsbestimmung bestenfalls über die gesamte Messlänge möglich sein.

Häufig werden derartige Messeinrichtungen beziehungsweise Messgeräte für elektrische Antriebe zur Bestimmung der Relativbewegung beziehungsweise der Relativlage von entsprechenden Maschinenteilen eingesetzt. In diesem Fall werden die erzeugten Positionswerte einer Folgeelektronik zur Ansteuerung der Antriebe über eine entsprechende Schnittstellenanordnung zugeführt.

Für viele Anwendungen von Positionsmesseinrichtungen, insbesondere von Winkelmess- oder Längenmesseinrichtungen, ist es wichtig zumindest Umdrehungsanzahlen oder Grobpositionen auch bei temporär fehlender Stromversorgung zu erfassen und nicht flüchtig zu speichern.

### STAND DER TECHNIK

In der WO 2023/118012 A1 wird eine Positionsmesseinrichtung zur Messung einer Winkelstellung beschrieben, die einen Domänenwandspeicher als Multi-Turn-Sensor aufweist. Dessen Domänenwände können von einem einzelnen offenbar diametral magnetisierten Permanentmagnet, der relativ zum Domänenwandspeicher drehbar ist, bewegt werden.

In der US 2014/300254 A1 wird eine weitere bekannte Positionsmesseinrichtung beschrieben, die einen Domänenwandspeicher als Multi-Turn-Sensor aufweist.

### ZUSAMMENFASSUNG DER ERFINDUNG

Der Erfindung liegt die Aufgabe zugrunde eine Positionsmesseinrichtung mit einem Domänenwandspeicher zu schaffen, die ein präzises und zuverlässiges Betriebsverhalten ermöglicht.

Diese Aufgabe wird erfindungsgemäß durch die Merkmale des Anspruches 1 gelöst.

Demnach umfasst die Positionsmesseinrichtung eine erste Bauteilgruppe und eine zweite Bauteilgruppe, wobei die Bauteilgruppen in einer Messrichtung relativ zueinander beweglich angeordnet sind. Die erste Bauteilgruppe weist einen Domänenwandspeicher auf, der einen in einer zur Messrichtung parallelen Fläche verlaufenden Domänenwandleiter umfasst. Die zweite Bauteilgruppe umfasst einen ersten Magnet und einen zweiten Magnet, wobei die Magnete insbesondere als Permanentmagnete ausgestaltet sein können. Diese Magnete sind in Messrichtung aneinandergereiht angeordnet. Weiterhin sind die Magnete so magnetisiert, dass deren Magnetisierungsrichtungen mit orthogonaler Richtungskomponente zur Fläche des Domänenwandleiters verlaufen, wobei die Magnete so angeordnet sind, dass diese entgegensetzte Magnetisierungsrichtungen aufweisen. Der erste Magnet und der zweite Magnet sind so angeordnet und ausgestaltet, dass der auf die Messrichtung bezogene Abstand zwischen dem ersten Magnet und dem zweiten Magnet entlang einer zweiten Richtung unterschiedlich groß ist. Dabei ist die zweite Richtung orthogonal zur Messrichtung und parallel zur Fläche orientiert.

Die Magnetisierungsrichtungen verlaufen mit orthogonaler Richtungskomponente zur Fläche des Domänenwandleiters, das heißt, dass die Magnetisierungsrichtungen jeweils eine Richtungskomponente aufweisen, die orthogonal zur Fläche orientiert ist. Insbesondere können die Magnetisierungsrichtungen orthogonal (im Rahmen der üblichen Anbautoleranzen) zur Fläche des Domänenwandleiters verlaufen.

Es sind Domänenwandleiter bekannt, die im Wesentlichen als eine offene Spirale ausgestaltet sind und solche, die einen geschlossenen Verlauf aufweisen. Insbesondere bei einem geschlossenen Verlauf kann ein Abschnitt des Domänenwandleiters unter einem anderen Abschnitt der Domänenwand verlaufen, um ein Kreuzen zu vermeiden. Als Fläche des Domänenwandleiters kann diejenige Fläche verstanden werden, in der ein beispielsweise spiralförmig verlaufender Teil des Domänenwandleiters (ausgenommen die Überbrückung oder Untertunnelung) angeordnet ist.

Die hier beschriebenen geometrischen Betrachtungen gelten für den räumlichen Bereich, in dem der betreffende Magnet dem Domänenwandleiter gegenüber liegt, sozusagen "aus Sicht" des Domänenwandleiters. Beispielsweise verläuft ausgehend vom Domänenwandleiter die Magnetisierungsrichtung mit orthogonaler Richtungskomponente beziehungsweise streng orthogonal zur Fläche des Domänenwandleiters in einer dritten Richtung, auch wenn die Magnete rotieren.

Zwischen dem ersten Magnet und dem zweiten Magnet liegt ein Spalt vor, der sich in Messrichtung erstreckt und dessen Länge in Messrichtung entlang der zweiten Richtung unterschiedlich groß ist. Die in Messrichtung gegenüber liegenden Konturen der Enden der Magnete sind also so ausgestaltet, dass diese, zumindest über einen sich in der zweiten Richtung erstreckenden Bereich, divergieren.

Als Magnetisierungsrichtung kann die Richtung einer Verbindungslinie zwischen dem Nordpol und dem Südpol eines Magnets verstanden werden. Die Magnete sind vorzugsweise durch die Dicke magnetisiert. Insbesondere kann die Magnetisierungsrichtung orthogonal zu den gegenüber liegenden größten Flächen des Magnets orientiert sein.

Bedingt durch die Tatsache, dass zwischen dem ersten und dem zweiten Magnet in Messrichtung ein Abstand vorliegt, existiert in diesem Bereich ein Zwischenraum, der entweder aus Luft besteht, oder aber durch weitgehend unmagnetisches Material ausgefüllt ist.

Ein Domänenwandleiter besteht aus einem magnetisierbaren Material und ist im Zusammenhang mit der vorliegenden Erfindung insbesondere als zumindest eine Leiterspur beziehungsweise Leiterbahn oder ein Nanodraht ausgestaltet. In dem Domänenwandleiter kann Information in Form von gegensätzlich magnetisierten Regionen (Domänen) gespeichert werden. Die Domänen sind entlang der Leiterspur durch so genannte Domänenwände getrennt, die durch Magnetfelder verschoben werden können, wobei sich die Positionen der Domänen ändern.

Mit Vorteil umfasst der Domänenwandspeicher ein insbesondere ebenes Substrat und der Domänenwandleiter ist als eine Leiterbahn auf dem Substrat ausgestaltet. In diesem Fall ist die Fläche, in welcher der Domänenwandleiter verläuft, eben. Alternativ könnte die Fläche auch gekrümmt ausgestaltet sein, insbesondere wenn der Domänenwandleiter Magneten mit einer gekrümmten Oberfläche gegenüber liegt.

Die Strukturbreite des Domänenwandleiters beträgt üblicherweise weniger als 500 nm häufig weniger als 300 nm, und die Dicke beziehungsweise Schichtdicke des Domänenwandleiters beträgt weniger als 60 nm. Der Domänenwandspeicher kann mehrere Domänenwandleiter aufweisen.

Der Domänenwandspeicher weist weiterhin Ausleseelemente auf, durch die (an der jeweiligen Position der Ausleseelemente) der lokale Magnetisierungszustand des Domänenwandleiters bestimmbar ist. Durch die Ausleseelemente ist somit jeweils ein Magnetisierungszustand des Domänenwandleiters bestimmbar. Die Ausleseelemente sind bezüglich des Domänenwandleiters ortsfest angeordnet. Als Ausleseelemente kommen beispielsweise GMR- oder TMR-Sensoren in Betracht.

Vorteilhafterweise ist der Domänenwandleiter bezüglich der zweiten Richtung so positioniert, dass dieser von den Magneten im Bereich des geringsten Abstands passiert wird. Bei einer Vorbeifahrt der Magnete am Domänenwandleiter, befindet sich der Domänenwandleiter im Bereich des geringsten Abstands der Magnete und wird von den dort vorliegenden Magnetfeldlinien beeinflusst.

In weiterer Ausgestaltung der Erfindung ist zumindest einer der Magnete so ausgestaltet, dass dieser bezüglich einer Linie, die parallel zur Messrichtung und insbesondere auch orthogonal zur Magnetisierungsrichtung verläuft, eine asymmetrische Form aufweist. Diese Asymmetrie kann insbesondere durch eine asymmetrische Ausgestaltung zumindest eines Endes eines Magnets erreicht werden.

Mit Vorteil ist zumindest einer der Magnete an seinem Ende so ausgestaltet, dass dessen Kontur gekrümmt verläuft, beispielsweise kann die Kontur in erster Näherung entlang einer elliptischen Linie oder entlang einer Kreislinie verlaufen.

Vorteilhafterweise sind die Magnete so ausgestaltet, dass sich der Abstand in Messrichtung zwischen dem ersten Magnet und dem zweiten Magnet entlang der zweiten Richtung stetig verändert. Demnach verläuft eine Kontur am Ende zumindest eines der Magnete im Bereich, in dem eine Änderung des Abstandes vorliegt, kontinuierlich also ohne Sprünge, beziehungsweise mit glattem Umriss.

Mit Vorteil sind die Magnete in Messrichtung so aneinandergereiht angeordnet, dass sich diese nicht berühren. Folglich ist also in Messrichtung der minimale Abstand zwischen dem ersten Magnet und dem zweiten Magnet größer als Null.

In weiterer Ausgestaltung der Erfindung befindet sich zwischen dem Domänenwandleiter und den Magneten ein Luftspalt mit einer Ausdehnung, die sich orthogonal zur Fläche, in der der Domänenwandleiter verläuft, erstreckt. Dabei ist der minimale Abstand bezogen auf die Messrichtung zwischen dem ersten Magnet und dem zweiten Magnet kleiner als die halbe Ausdehnung des Luftspaltes. Für den Fall, dass die Ausdehnung des Luftspalt nicht über der gesamten Fläche des Domänenwandleiters gleich groß sein sollte, gilt insbesondere, dass der minimale Abstand zwischen den Magneten kleiner ist als die Hälfte der kleinsten Ausdehnung des Luftspaltes.

Vorteilhafterweise sind die Bauteilgruppen um eine Achse relativ zueinander drehbar angeordnet und die Fläche, in welcher der Domänenwandleiter verläuft, wird nicht von der Achse geschnitten beziehungsweise durchdrungen. Bei dieser Anordnung verläuft die zweite Richtung entweder in radialer Richtung oder in axialer Richtung (Trommelanordnung) und die Messrichtung entspricht der Umfangs- beziehungsweise Tangentialrichtung. Häufig wird eine Anordnung, bei der die (Dreh-) Achse nicht die Fläche, in welcher der Domänenwandleiter verläuft, schneidet als "off-axis"-Konfiguration bezeichnet. Auch bei dieser Konstellation ist die zweite Richtung stets orthogonal zur Messrichtung orientiert. Insbesondere verläuft die zweite Richtung auch orthogonal zur Magnetisierungsrichtung.

Gemäß einer weiteren Ausgestaltung Positionsmesseinrichtung weist der Domänenwandleiter einen nicht geschlossenen Verlauf auf mit einem Anfang und einem Ende, im Gegensatz zu einem geschlossenen Verlauf, bei dem der Domänenwandleiter endlos ausgestaltet ist. Insbesondere kann der Domänenwandleiter als eine offene Spirale ausgestaltet sein.

In weiterer Ausgestaltung der Erfindung weist der Domänenwandleiter in Messrichtung eine maximale Ausdehnung auf, die kleiner ist als die Länge eines der Magnete, die sich in Messrichtung erstreckt.

Mit Vorteil weist der Domänenwandleiter in der zweiten Richtung eine maximale Ausdehnung auf, die kleiner ist als die sich ebenfalls in der zweiten Richtung erstreckende Breite eines der Magnete.

Vorteilhafterweise umfasst das Material, aus dem zumindest einer der Magnete hergestellt ist, einen Kunststoff mit einem magnetisierbaren Füllstoff. Insbesondere kann zumindest einer der Magnete durch ein Pressverfahren oder Spritzgussverfahren hergestellt sein. Alternativ kann der Magnet auch durch ein Sinterverfahren oder ein Gussverfahren hergestellt sein.

In weiterer Ausgestaltung der Erfindung verlaufen, bezogen auf eine Symmetrieachse, die parallel zur zweiten Richtung orientiert ist, die Konturen der einander gegenüber liegenden Enden der Magnete spiegelsymmetrisch.

Mit Vorteil sind die Magnete identisch beziehungsweise baugleich ausgestaltet.

Die Positionsmesseinrichtung kann als Winkelmesseinrichtung verwendet werden, bei der insbesondere Umdrehungsanzahlen gespeichert werden. Alternativ kann die Positionsmesseinrichtung als Längenmessgerät mit einem linearen Maßstab ausgestaltet sein, zur Messung von linearen Verschiebungen. Der Maßstab kann insbesondere ein erstes Maßstabsteil und ein zweites Maßstabsteil umfassen. Das erste Maßstabsteil und das zweite Maßstabsteil können etwa entlang der Messrichtung aneinandergereiht angeordnet sein, so dass eine vergleichsweise große Messlänge erreichbar ist. In der Praxis können auch durchaus mehr als nur zwei Maßstabsteile aneinandergereiht angeordnet sein. Entlang der ersten Richtung zueinander versetzt sind dann Magnete vorgesehen. Durch den Domänenwandspeicher ist es möglich entsprechende Positionsinformationen zu speichern, so dass feststellbar ist welches der Maßstabsteile gerade abgetastet wird.

Vorteilhafte Ausbildungen der Erfindung entnimmt man den abhängigen Ansprüchen.

Weitere Einzelheiten und Vorteile der erfindungsgemäßen Positionsmesseinrichtung ergeben sich aus der nachfolgenden Beschreibung von Ausführungsbeispielen anhand der beiliegenden Figuren.

### KURZE BESCHREIBUNG DER ZEICHNUNGEN

Es zeigen die
- Figur 1: eine perspektivische Ansicht auf eine Positionsmesseinrichtung gemäß einem ersten Ausführungsbeispiel,
- Figur 2: eine Schnittansicht auf ein Detail der Positionsmesseinrichtung
- Figur 3: eine Draufsicht auf zwei Magnete und auf einen Domänenwandleiter,
- Figur 4: eine Draufsicht auf den Domänenwandleiter,
- Figur 5: ein Diagramm des schematischen Verlaufes der Orientierung des Magnetfeldes in Abhängigkeit von der Messrichtung,
- Figur 6: eine Draufsicht auf zwei Magnete mit dem Domänenwandleiter gemäß einem zweiten Ausführungsbeispiel.

### BESCHREIBUNG DER AUSFÜHRUNGSFORMEN

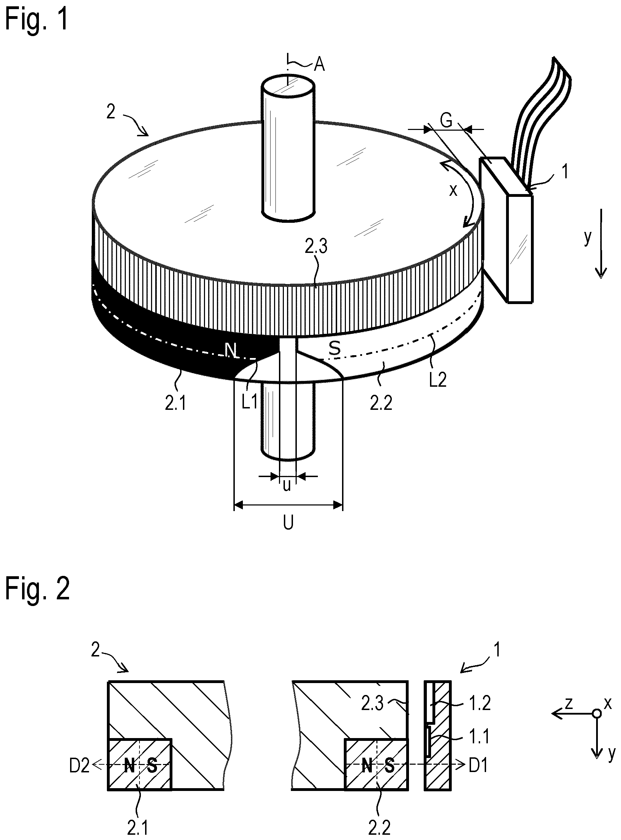

In der Figur 1 ist eine Positionsmesseinrichtung dargestellt, die eine erste Bauteilgruppe 1 und eine zweite Bauteilgruppe 2 umfasst, wobei die Bauteilgruppen 1, 2 relativ zueinander um eine Achse A drehbar angeordnet sind.

Die zweite Bauteilgruppe 2 ist im vorgestellten ersten Ausführungsbeispiel als eine Trommel beziehungsweise Scheibe ausgestaltet und weist hier mantelseitig eine Skala 2.3 beziehungsweise ein sich in einer Messrichtung x erstreckenden Teilung auf.

Axial versetzt zur Skala 2.3 sind ein erster Magnet 2.1 und ein zweiter Magnet 2.2 angeordnet, wobei die Magnete 2.1, 2.2 der zweiten Bauteilgruppe 2 zugeordnet sind. Die Magnete 2.1, 2.2 und die Skala 2.3 sind also jeweils fest miteinander verbunden und bewegen beziehungsweise drehen sich mit der gleichen Geschwindigkeit beziehungsweise Drehzahl. Die Magnete 2.1, 2.2 sind in der Messrichtung x, die hier der Umfangsrichtung entspricht, aneinandergereiht angeordnet und weisen jeweils eine sich in Messrichtung x erstreckende Mittelinie L1, L2 auf. Zudem sind die Magnete 2.1, 2.2 als Permanentmagnete ausgestaltet und jeweils durch die Dicke magnetisiert, also so, dass deren Magnetisierungsrichtungen D1, D2 radial orientiert sind (siehe auch die Figur 2).

Im vorgestellten Ausführungsbeispiel sind die Magnete 2.1, 2.2 als kunststoffgebundene Magnete ausgestaltet. Entsprechend umfassen diese Kunststoff mit einem magnetisierbaren Füllstoff, beziehungsweise Magnetpulver. Der Füllstoff ist in einer Kunststoffmatrix eingebettet. Insbesondere können die Magnete 2.1, 2.2 als gepresste Magnete ausgeführt sein, wobei der magnetisierbare Füllstoff in einer duroplastischen Kunststoffmatrix, z. B. Epoxidharz, eingebettet ist. Alternativ können die Magnete 2.1, 2.2 auch in einem Spritzgussverfahren hergestellt werden.

Die Magnete 2.1, 2.2 sind so angeordnet, dass diese entgegensetzte Magnetisierungsrichtungen D1, D2 aufweisen. Im vorgestellten Ausführungsbeispiel weist der erste Magnet 2.1 seinen Nordpol mantelseitig radial außen auf, während der zweite Magnet 2.2 seinen Südpol mantelseitig radial außen aufweist.

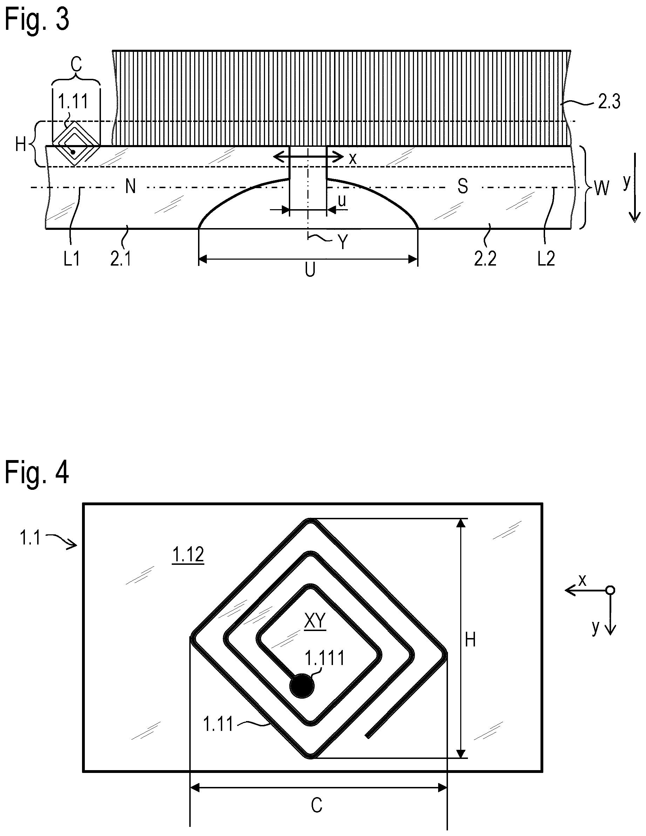

Die Enden der Magnete 2.1, 2.2 sind so ausgestaltet, dass sich diese verjüngen. Demnach sind der erste Magnet 2.1 und der zweite Magnet 2.2 so ausgestaltet, dass sich der in Messrichtung x erstreckende Abstand u, U zwischen dem ersten Magnet 2.1 und dem zweiten Magnet 2.2 verändert, wenn man diesen an verschiedenen Stellen entlang einer zweiten Richtung y ermittelt. In der Figur 3 vergrößert sich der Abstand u, U, entlang der zweiten Richtung y von oben nach unten dem Pfeil folgend. Die zweite Richtung y verläuft orthogonal zur Messrichtung x, also hier parallel zur Achse A beziehungsweise in axialer Richtung. Somit ist der Abstand u, U entlang der zweiten Richtung y beziehungsweise in Abhängigkeit von einer Position entlang der zweiten Richtung y unterschiedlich groß. Die Konturen der einander gegenüber liegenden Enden der Magnete 2.1, 2.2 sind spiegelsymmetrisch ausgestaltet, bezogen auf eine Symmetrieachse Y (Figur 3), die parallel zur zweiten Richtung y orientiert ist. Zudem sind die Enden der Magnete 2.1, 2.2 so ausgestaltet, dass deren Konturen bezüglich einer Linie die parallel zur Messrichtung x orientiert ist, insbesondere bezüglich der Mittelinie L1, L2, asymmetrisch verlaufen. Im Bereich, in dem sich der Abstand u, U in Messrichtung x zwischen den Magneten 2.1, 2.2 verändert, sind der erste Magnet 2.1 und der zweite Magnet 2.2 beziehungsweise deren Konturen so ausgestaltet, dass sich dieser Abstand u, U entlang der zweiten Richtung y stetig verändert, das heißt, dass die Konturen dort entlang der zweiten Richtung y als glatte Kurven und ohne einen Sprung ausgebildet sind.

Gemäß der Figur 2 umfasst die erste Bauteilgruppe 1 einen Domänenwandspeicher 1.1 sowie einen Positionsdetektor 1.2, durch den die Skala 2.3 abgetastet werden kann und die Skaleninformation in elektrische Signale umwandelbar ist. Beispielsweise kann die Skala 2.3 als eine optische Teilung ausgestaltet sein, so dass dann der Positionsdetektor 1.2 eine Lichtquelle und Fotodetektoren umfasst. Alternativ kann die Teilung auch als eine magnetische Teilung ausgestaltet sein, wobei dann der Positionsdetektor 1.2 magnetoresistive Elemente oder beispielsweise Hallelemente umfassen würde. Ebenso ist es möglich ein induktives Abtastprinzip zur Bestimmung der Position zu verwenden. In letzterem Fall würde die Teilung entsprechend ausgestaltet sein.

Der Domänenwandspeicher 1.1 umfasst gemäß der Figur 4 einen Domänenwandleiter 1.11 und ein Substrat 1.12, wobei der Domänenwandleiter 1.11 in Form einer Leiterbahn auf dem Substrat 1.12 aufgebracht ist und in (beziehungsweise auf) einer ersten Fläche XY verläuft. Der Domänenwandleiter 1.11 weist an einem Ende einen Domänenwandgenerator 1.111 auf. Im vorgestellten Ausführungsbeispiel weist das Substrat 1.12 eine mechanisch tragende Siliziumschicht auf, wobei das Substrat 1.12 eben ausgestaltet ist und der Domänenwandleiter 1.11 ein Teil eines CMOS-Chips sein kann. Alternativ kann das Substrat eine Glasschicht aufweisen. Der Domänenwandleiter 1.11 umfasst ein weichmagnetisches Material beispielsweise eine Ni-Fe-Legierung. Der Domänenwandleiter 1.11 kann wie in der Figur 4 dargestellt als eine offene Spirale ausgestaltet sein oder einen geschlossenen Verlauf aufweisen.

Im Betrieb der Positionsmesseinrichtung liegen die erste Bauteilgruppe 1 und die zweite Bauteilgruppe 2 einander gegenüber. Im vorgestellten Ausführungsbeispiel kann die erste Bauteilgruppe 1 als Stator und die zweite Bauteilgruppe 2 als Rotor betrieben werden.

Die Skala 2.3 wird dann durch den Positionsdetektor 1.2 (Figur 2) abgetastet, welcher elektrische Signale mit der Positionsinformation liefert, die über ein Kabel an eine weitere Elektronik geleitet werden können.

Der Domänenwandspeicher 1.1 wird zur Gewährleistung einer Multiturn-Funktionalität, also das Zählen von vielen Umdrehungen beziehungsweise Durchläufen, verwendet. Der Domänenwandspeicher 1.1 ist so angeordnet, dass die Fläche XY, in welcher der Domänenwandleiter 1.11 verläuft (beziehungsweise angeordnet ist), orthogonal zur Magnetisierungsrichtung D1, D2 orientiert ist.

Der Domänenwandleiter 1.11 weist gemäß den Figuren 3 und 4 in der zweiten Richtung y eine maximale Ausdehnung H auf und in Messrichtung x eine maximale Ausdehnung C. Zudem ist der Domänenwandleiter 1.11 in der zweiten Richtung y, hier in axialer Richtung, versetzt zu den Mittellinien L1, L2 der Magnete 2.1, 2.2 angeordnet.

Zur Vergleichmäßigung des Magnetfelds im Bereich des Übergangs vom ersten Magnet 2.1 zum zweiten Magnet 2.2 ist hier der minimale Abstand u größer als Null gewählt. Der minimale Abstand u zwischen dem ersten und dem zweiten Magnet 2.1, 2.2 ist zudem so dimensioniert, dass dieser kleiner ist als die halbe Ausdehnung G des Luftspalts zwischen Domänenwandleiter 1.11 und Magnete 2.1, 2.2 (u < ½ G).

In der Figur 3 ist eine vereinfachte Detailansicht der Positionsmesseinrichtung gezeigt. Durch die beiden gestichelten Linien soll die Bewegungsspur des Domänenwandleiters 1.11 während der relativen Bewegung der beiden Bauteilgruppen 1, 2 dargestellt werden. Daraus ist ersichtlich, dass der Domänenwandleiter 1.11 so versetzt zu den Mittellinien L1, L2 der Magnete 2.1, 2.2, angeordnet ist, dass sich kein Bereich des Domänenwandleiters 1.11 über die Mittellinien L1, L2 erstreckt, der Domänenwandleiter 1.11 also über die gesamte Ausdehnung H außerhalb der Mittellinien L1, L2 angeordnet ist.

Zudem weisen die Magnete 2.1, 2.2 eine sich in der zweiten Richtung y erstreckende Breite W auf. Es gilt hier, dass die maximale Ausdehnung H des Domänenwandleiters 1.11 in der zweiten Richtung y kleiner ist als die Breite W der Magnete 2.1, 2.2 (H < W). Weiterhin ist die maximale Ausdehnung C des Domänenwandleiters 1.11 in Messrichtung x kleiner als die sich in Messrichtung x erstreckende Länge eines der Magnete 2.1, 2.2. Die Konturen der einander gegenüber liegenden Enden der Magnete 2.1, 2.2 sind spiegelsymmetrisch beziehungsweise achsensymmetrisch ausgestaltet, bezogen auf eine Symmetrieachse Y, die parallel zur zweiten Richtung y orientiert ist.

Wenn ein relativ zum Domänenwandleiter 1.11 bewegtes Magnetfeld geeignet auf den Domänenwandleiter 1.11 einwirkt, verschieben sich Domänenwände innerhalb beziehungsweise entlang des Domänenwandleiters 1.11. Zur Bildung eines optimierten Magnetfeldes wird eine Magnetanordnung verwendet, wie sie oben beschrieben ist mit den Magneten 2.1, 2.2, die an den jeweiligen einander gegenüber liegenden Enden der Magnete 2.1, 2.2 Verjüngungen aufweisen. Es hat sich als überaus vorteilhaft herausgestellt, wenn wie im Ausführungsbeispiel die jeweilige Kontur eines Endes eines Magnets 2.1, 2.2 gekrümmt verläuft, so dass die Magnete 2.1, 2.2 jeweils an ihren Enden einen konkaven Abschnitt aufweisen.

Der Domänenwandleiter 1.11 ist bezüglich der zweiten Richtung y so positioniert, dass dieser von den Magneten 2.1, 2.2 im Bereich des geringsten Abstands u passiert wird. Wenn sich nun die Magnete 2.1, 2.2 in der Messrichtung x relativ zum Domänenwandleiter 1.11 bewegen, wirkt auf den Domänenwandleiter 1.11 an den Enden und insbesondere im Bereich des Spalts zwischen den Magneten 2.1, 2.2 ein Magnetfeld, das in der Ebene des Domänenwandleiters 1.11, also in der Fläche XY, quasi rotierend ist. Infolgedessen verschieben sich die Positionen von Domänenwänden, wobei das Verschiebefeld dadurch erzeugt wird, dass die Magnete 2.1, 2.2 am Domänenwandleiter 1.11 vorbeigeführt werden.

Nach jeder Vorbeifahrt der Enden der Magnete 2.1, 2.2 am Domänenwandleiter 1.11 beziehungsweise nach jeder halben Umdrehung der zweiten Bauteilgruppe 2 bewegt sich die Domänenwand, beziehungsweise bewegen sich die Domänenwände, weiter.

Die Magnetisierungsrichtungen innerhalb von Abschnitten des Domänenwandleiters 1.11 und damit die Positionen der Domänenwände können durch die im Domänenwandspeicher 1.1 integrierten Ausleseelemente detektiert werden. Auf diese Weise ist eine Zählung von Umdrehungen beziehungsweise eine Speicherung der Umdrehungsinformation in einer Winkelmesseinrichtung möglich, auch wenn keine Hilfsenergie nutzbar ist. Dies ist beispielsweise wichtig, wenn bei einem Stromausfall eine Welle etwa durch Gewichtsbelastung bewegt wird. Die Domänenwände werden im Übrigen drehrichtungsabhängig verschoben, so dass der Domänenwandspeicher 1.1 zuverlässig bei Anwendungen eingesetzt werden kann, die beide Drehrichtungen zulassen.

Aus der Abtastung der Skala 2.3 durch den Positionsdetektor 1.2 resultiert eine vergleichsweise genaue Bestimmung der Winkelposition innerhalb einer Umdrehung. Zur absoluten Bestimmung der Winkelposition über mehrere Umdrehungen hinweg müssen die mit dem Positionsdetektor 1.2 ermittelte Winkelposition (Feinposition) mit der Umdrehungsinformation (Grobposition) des Domänenwandleiters 1.1 synchronisiert werden.

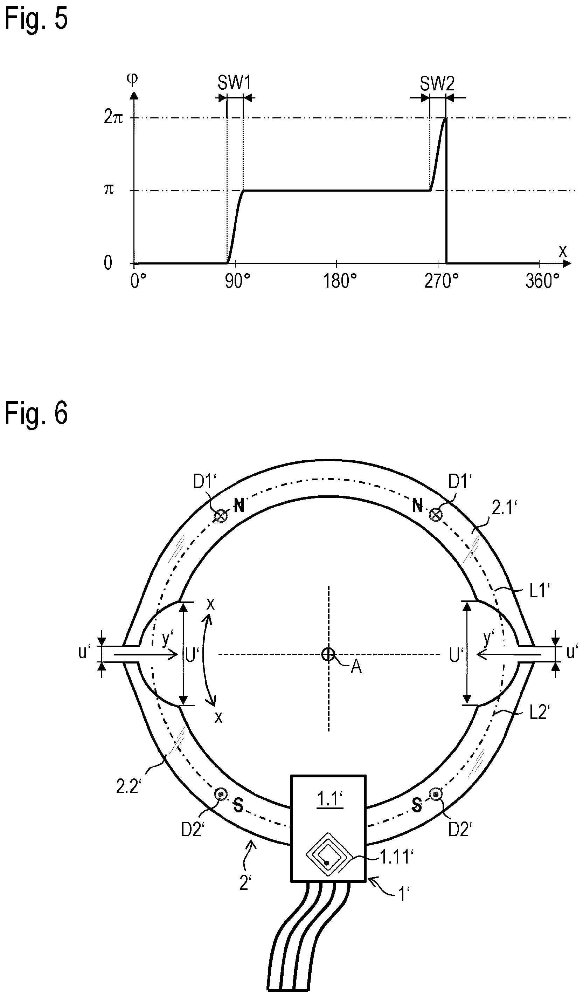

In der Figur 5 ist ein schematisches Diagramm gezeigt, bei dem über der Messrichtung x die winkelmäßige Orientierung φ des Magnetfeldes (magnetischer Winkel) aufgetragen ist. Die winkelmäßige Orientierung φ des Magnetfeldes wird in der Fläche XY betrachtet, in welcher der Domänenwandleiter 1.11 verläuft, insbesondere in der Mitte der Spirale (Schwerpunkt der Spirale), wobei sich die Fläche XY gemäß der Figur 4 über die Ausdehnung C und die Ausdehnung H erstreckt.

Zu Beginn der Drehbewegung befindet sich die Anordnung in einer Lage gemäß der Figur 1 bei x= 0°. Durch die beiden Magnete 2.1, 2.2 wird am Domänenwandleiter 1.11 ein Magnetfeld erzeugt, das bei einer Drehbewegung der zweiten Bauteilgruppe 2 um die Achse A über nahezu eine viertel Umdrehung hinweg konstant die Orientierung φ = 0 aufweist. Erst bei Erreichen des Endes des zweiten Magnets 2.2 ändert sich die Orientierung φ des Magnetfeldes und die zweite Bauteilgruppe 2 bewegt sich in einen ersten Übergangsbereich SW1 hinein. Wenn sich die zweite Bauteilgruppe 2 mit den Magneten 2.1, 2.2 weiterdreht, ändert sich im ersten Übergangsbereich SW1 die Orientierung φ des Magnetfelds von φ = 0 auf φ = π und die Domänenwand beziehungsweise die Domänenwände werden weiter verschoben oder eine neue Domänenwand wird generiert oder gelöscht. Bei weiterer Drehung bis kurz vor Ende des ersten Magnets 2.1 bleibt die Orientierung φ des Magnetfeldes bei φ = π. Erst ab dem zweiten Übergangsbereich SW2 vom ersten Magnet 2.1 zum zweiten Magnet 2.2 ändert sich die Orientierung des Magnetfeldes von π auf 2π. Auch bei diesem Übergang liegt ein Übergangsbereich SW2 vor (beidseitig von x = 270°), in dem die Orientierung φ des Magnetfeldes einen Zwischenwert annimmt. Danach liegt die gleiche magnetische Orientierung vor wie bei x = 0 für die definitionsgemäß gilt φ = 2π =0. Außerhalb der Übergangsbereiche SW1, SW2 ist die Orientierung φ des Magnetfeldes so ausgerichtet, dass dort keine Bewegung der Domänenwand beziehungsweise der Domänenwände möglich ist und auch keine Generierung oder Löschung einer neuen Domänenwand. Durch die Erfindung ist es möglich die Übergangsbereiche SW1, SW2 relativ klein (bezogen auf die Messrichtung x) zu halten, so dass mechanische Hystereseeffekte minimiert sind.

Gemäß einem zweiten Ausführungsbeispiel nach Figur 6 ist der Domänenwandspeicher 1.1' der ersten Bauteilgruppe 1' in axialem Abstand zum ersten Magnet 2.1' und zum zweiten Magnet 2.2' der zweiten Bauteilgruppe 2' angeordnet. Die Magnete 2.1', 2.2' sind auch im zweiten Ausführungsbeispiel in der Messrichtung x, die auch hier der Umfangsrichtung entspricht, aneinandergereiht angeordnet und weisen jeweils eine sich in Messrichtung x erstreckende Mittelinie L1', L2' auf. Die zweite Richtung y' verläuft hier in radialer Richtung. Zudem sind die Magnete 2.1', 2.2' als Permanentmagnete ausgestaltet und jeweils durch die Dicke magnetisiert, also so, dass deren Magnetisierungsrichtungen D1', D2' hier axial orientiert sind. Die Magnete 2.1', 2.2' weisen entgegensetzte Magnetisierungsrichtungen D1', D2' auf. Im vorgestellten Ausführungsbeispiel sind beide Magnete 2.1', 2.2' identisch, was für die Montage und Lagerhaltung vorteilhaft ist.

Die Enden der Magnete 2.1', 2.2' sind auch im zweiten Ausführungsbeispiel so ausgestaltet, dass sich diese verjüngen, so dass der erste Magnet 2.1' und der zweite Magnet 2.2' sich der in Messrichtung x erstreckende Abstand u', U' zwischen den Magneten 2.1', 2.2' verändert, wenn man diesen an verschiedenen Stellen entlang der zweiten Richtung y ermittelt. Die zweite Richtung y verläuft orthogonal zur Messrichtung x und orthogonal zu den Magnetisierungsrichtungen D1', D2', also hier in radialer Richtung. Somit ist der Abstand u', U' entlang der zweiten Richtung y' unterschiedlich groß.

Der Domänenwandleiter 1.11' ist bei dieser Ausführungsform "off-axis" angeordnet, das heißt, dass die Achse A neben dem Domänenwandleiter 1.11' verläuft und diesen nicht schneidet.

Die Erfindung kann auch bei Positionsmesseinrichtungen zur Messung von linearen Verschiebungen verwendet werden. Dies würde einer Anordnung gemäß der Figur 1 entsprechen, deren Trommel einen unendlichen Radius aufweisen würde. In diesem Fall würden mehrere Skalen 2.3 in Messrichtung x aneinandergereiht werden. Die Draufsicht auf die Magnete 2.1, 2.2 für eine lineare entspricht prinzipiell der Ansicht gemäß der Figur 3.

## Patentansprüche

1. Positionsmesseinrichtung umfassend eine erste Bauteilgruppe (1; 1') und eine zweite Bauteilgruppe (2; 2'), wobei die Bauteilgruppen (1, 2; 1', 2') in einer Messrichtung (x) relativ zueinander beweglich angeordnet sind, wobei
die erste Bauteilgruppe (1; 1') einen Domänenwandspeicher (1.1; 1.1') aufweist, der einen in einer zur Messrichtung (x) parallelen Fläche (XY) verlaufenden Domänenwandleiter (1.11; 1.11') umfasst,
die zweite Bauteilgruppe (2; 2') einen ersten Magnet (2.1; 2.1') und einen zweiten Magnet (2.2; 2.2') umfasst, wobei die Magnete (2.1, 2.2; 2.1', 2.2')
- in Messrichtung (x) aneinandergereiht angeordnet sind,
- so magnetisiert sind, dass deren Magnetisierungsrichtungen (D1, D2; D1', D2') mit orthogonaler Richtungskomponente zur Fläche (XY) verlaufen,
- so angeordnet sind, dass diese entgegensetzte Magnetisierungsrichtungen (D1, D2; D1', D2') aufweisen, wobei
die Magnete (2.1, 2.2; 2.1', 2.2') so angeordnet und ausgestaltet sind, dass der Abstand (u, U; u', U') in Messrichtung (x) zwischen dem ersten Magnet (2.1; 2.1') und dem zweiten Magnet (2.2; 2.2') entlang einer zweiten Richtung (y; y'), die orthogonal zur Messrichtung (x) und parallel zur Fläche (XY) orientiert ist, unterschiedlich groß ist.

2. Positionsmesseinrichtung gemäß dem Anspruch 1, wobei der Domänenwandleiter (1.11; 1.11') bezüglich der zweiten Richtung (y; y') so positioniert ist, dass eine Vorbeifahrt der Magnete (2.1, 2.2; 2.1', 2.2') im Bereich des geringsten Abstands (u; u') erfolgt.

3. Positionsmesseinrichtung gemäß dem Anspruch 1 oder 2, wobei zumindest einer der Magnete (2.1, 2.2; 2.1', 2.2') an seinem Ende so ausgestaltet ist, dass dessen Kontur gekrümmt verläuft.

4. Positionsmesseinrichtung gemäß einem der vorhergehenden Ansprüche, wobei zumindest einer der Magnete (2.1, 2.2; 2.1', 2.2') so ausgestaltet ist, dass dieser bezüglich einer Linie (L1, L2; L1', L2'), die parallel zur Messrichtung (x) verläuft, asymmetrisch ist.

5. Positionsmesseinrichtung gemäß einem der vorhergehenden Ansprüche, wobei sich der Abstand (u, U; u', U') in Messrichtung (x) zwischen dem ersten Magnet (2.1; 2.1') und dem zweiten Magnet (2.2; 2.2') entlang der zweiten Richtung (y; y') stetig verändert.

6. Positionsmesseinrichtung gemäß einem der vorhergehenden Ansprüche, wobei sich zwischen dem Domänenwandleiter (1.11; 1.11') und den Magneten (2.1, 2.2; 2.1', 2.2') ein Luftspalt befindet mit einer Ausdehnung (G), die sich orthogonal zur Fläche (XY) erstreckt, wobei der minimale Abstand (u; u') in Messrichtung (x) zwischen dem ersten Magnet (2.1; 2.1') und dem zweiten Magnet (2.2; 2.2') kleiner ist als die halbe Ausdehnung (G) des Luftspaltes.

7. Positionsmesseinrichtung gemäß einem der vorhergehenden Ansprüche, wobei die Magnete (2.1, 2.2; 2.1', 2.2') in Messrichtung (x) so aneinandergereiht angeordnet sind, dass sich diese nicht berühren.

8. Positionsmesseinrichtung gemäß einem der vorhergehenden Ansprüche, wobei die Bauteilgruppen (1, 2; 1', 2') um eine Achse (A) relativ zueinander drehbar angeordnet sind und die Fläche (XY), in welcher der Domänenwandleiter (1.11; 1.11') verläuft, nicht von der Achse (A) geschnitten wird.

9. Positionsmesseinrichtung gemäß einem der vorhergehenden Ansprüche, wobei der Domänenwandleiter (1.11; 1.11') einen nicht geschlossenen Verlauf aufweist.

10. Positionsmesseinrichtung gemäß einem der vorhergehenden Ansprüche, wobei der Domänenwandleiter (1.11; 1.11') in Messrichtung (x) eine maximale Ausdehnung (C) aufweist, die kleiner ist als die sich in Messrichtung (x) erstreckende Länge eines der Magnete (2.1, 2.2; 2.1', 2.2').

11. Positionsmesseinrichtung gemäß einem der vorhergehenden Ansprüche, wobei der Domänenwandleiter (1.11; 1.11') in der zweiten Richtung (y; y') eine maximale Ausdehnung (H) aufweist, die kleiner ist als die sich ebenfalls in der zweiten Richtung (y; y') erstreckende Breite (W) eines der Magnete (2.1, 2.2; 2.1', 2.2').

12. Positionsmesseinrichtung gemäß einem der vorhergehenden Ansprüche, wobei das Material zumindest eines der Magnete (2.1, 2.2; 2.1', 2.2') Kunststoff mit einem magnetisierbaren Füllstoff umfasst.

13. Positionsmesseinrichtung gemäß einem der vorhergehenden Ansprüche, wobei die Konturen der einander gegenüber liegenden Enden der Magnete (2.1, 2.2; 2.1', 2.2') spiegelsymmetrisch ausgestaltet sind, bezogen auf eine Symmetrieachse (y; y'), die parallel zur zweiten Richtung (y; y') orientiert ist.

14. Positionsmesseinrichtung gemäß einem der vorhergehenden Ansprüche, wobei die Magnete (2.1', 2.2') identisch ausgestaltet sind.

## Claims

1. Position measuring device comprising a first component group (1; 1') and a second component group (2; 2'), wherein the component groups (1, 2; 1', 2') are arranged moveably relative to each other in a measuring direction (x), wherein
the first component group (1; 1') has a domain wall memory (1.1; 1.1') which comprises a domain wall conductor (1.11; 1.11') running in a surface (XY) parallel to the measuring direction (x),
the second component group (2; 2') comprises a first magnet (2.1; 2.1') and a second magnet (2.2; 2.2'), wherein the magnets (2.1, 2.2; 2.1', 2.2')
- are arranged in a row in the measuring direction (x),
- are magnetized such that their magnetization directions (D1, D2; D1', D2') run with orthogonal direction components with respect to the surface (XY),
- are arranged such that they have opposite magnetization directions (D1, D2; D1', D2'), wherein the magnets (2.1, 2.2; 2.1', 2.2') are arranged and designed such that the distance (u, U; u', U') in the measuring direction (x) between the first magnet (2.1; 2.1') and the second magnet (2.2; 2.2') is different along a second direction (y; y'), which is oriented orthogonally with respect to the measuring direction (x) and parallel with respect to the surface (XY).

2. Position measuring device according to Claim 1, wherein the domain wall conductor (1.11; 1.11') is positioned with regard to the second direction (y; y') such that the magnets (2.1, 2.2; 2.1', 2.2') pass by the domain wall conductor in the region of the smallest distance (u; u').

3. Position measuring device according to Claim 1 or 2, wherein at least one of the magnets (2.1, 2.2; 2.1', 2.2') is designed at its end such that its contour is curved.

4. Position measuring device according to any of the preceding claims, wherein at least one of the magnets (2.1, 2.2; 2.1', 2.2') is designed such that it is asymmetrical with regard to a line (L1, L2; L1', L2') which runs parallel to the measuring direction (x).

5. Position measuring device according to any of the preceding claims, wherein the distance (u, U; u', U') in the measuring direction (x) between the first magnet (2.1; 2.1') and the second magnet (2.2; 2.2') changes continuously along the second direction (y; y').

6. Position measuring device according to any of the preceding claims, wherein there is an air gap between the domain wall conductor (1.11; 1.11') and the magnets (2.1, 2.2; 2.1', 2.2'), the air gap having an extent (G) which extends orthogonally with respect to the surface (XY), wherein the minimum distance (u; u') in the measuring direction (x) between the first magnet (2.1; 2.1') and the second magnet (2.2; 2.2') is smaller than half the extent (G) of the air gap.

7. Position measuring device according to any of the preceding claims, wherein the magnets (2.1, 2.2; 2.1', 2.2') are arranged in a row in the measuring direction (x) such that they do not touch each other.

8. Position measuring device according to any of the preceding claims, wherein the component groups (1, 2; 1', 2') are arranged rotatably about an axis (A) relative to each other and the surface (XY) in which the domain wall conductor (1.11; 1.11') runs is not intersected by the axis (A).

9. Position measuring device according to any of the preceding claims, wherein the domain wall conductor (1.11; 1.11') has a non-closed course.

10. Position measuring device according to any of the preceding claims, wherein the domain wall conductor (1.11; 1.11') has a maximum extent (C) in the measuring direction (x) that is smaller than the length of one of the magnets (2.1, 2.2; 2.1', 2.2') extending in the measuring direction (x).

11. Position measuring device according to any of the preceding claims, wherein the domain wall conductor (1.11; 1.11') has a maximum extent (H) in the second direction (y; y') that is smaller than the width (W) of one of the magnets (2.1, 2.2; 2.1', 2.2') also extending in the second direction (y; y').

12. Position measuring device according to any of the preceding claims, wherein the material of at least one of the magnets (2.1, 2.2; 2.1', 2.2') comprises plastic with a magnetizable filler.

13. Position measuring device according to any of the preceding claims, wherein the contours of the mutually opposite ends of the magnets (2.1, 2.2; 2.1', 2.2') are designed with mirror-image symmetry, based on an axis of symmetry (y; y') which is oriented parallel to the second direction (y; y').

14. Position measuring device according to any of the preceding claims, wherein the magnets (2.1', 2.2') are of identical design.

## Revendications

1. Dispositif de mesure de position comprenant un premier groupe de composants (1 ; 1') et un deuxième groupe de composants (2 ; 2'), dans lequel les groupes de composants (1, 2 ; 1', 2') sont disposés de manière mobile les uns par rapport aux autres dans une direction de mesure (x), dans lequel
le premier groupe de composants (1 ; 1') comporte une mémoire de parois de domaines (1.1 ; 1.1') comprenant un conducteur de parois de domaines (1.11 ; 1.11') s'étendant dans une surface (XY) parallèle à la direction de mesure (x),
le deuxième groupe de composants (2 ; 2') comprend un premier aimant (2.1 ; 2.1') et un deuxième aimant (2.2 ; 2.2'), dans lequel les aimants (2.1, 2.2 ; 2.1', 2.2')
- sont disposés les uns à la suite des autres dans la direction de mesure (x),
- sont magnétisés de telle sorte que leurs directions de magnétisation (D1, D2 ; D1', D2') s'étendent avec une composante directionnelle orthogonale à la surface (XY),
- sont disposés de telle sorte qu'ils présentent des directions de magnétisation opposées (D1, D2 ; D1', D2'),
dans lequel
les aimants (2.1, 2.2 ; 2.1', 2.2') sont disposés et configurés de telle sorte que la distance (u, U ; u', U') dans la direction de mesure (x) entre le premier aimant (2.1 ; 2.1') et le deuxième aimant (2.2 ; 2.2') soit de grandeur différente le long d'une deuxième direction (y ; y') qui est orientée perpendiculairement à la direction de mesure (x) et parallèlement à la surface (XY).

2. Dispositif de mesure de position selon la revendication 1, dans lequel le conducteur de parois de domaines (1.11 ; 1.11') est positionné par rapport à la deuxième direction (y ; y') de telle sorte qu'un passage des aimants (2.1, 2.2 ; 2.1', 2.2') s'effectue dans la zone présentant la distance la plus petite (u ; u').

3. Dispositif de mesure de position selon la revendication 1 ou 2, dans lequel au moins l'un des aimants (2.1, 2.2 ; 2.1', 2.2') est configuré à son extrémité de telle sorte que son contour s'étende de manière incurvée.

4. Dispositif de mesure de position selon l'une quelconque des revendications précédentes, dans lequel au moins l'un des aimants (2.1, 2.2 ; 2.1', 2.2') est configuré de telle sorte qu'il soit asymétrique par rapport à une ligne (L1, L2 ; L1', L2') s'étendant parallèlement à la direction de mesure (x).

5. Dispositif de mesure de position selon l'une quelconque des revendications précédentes, dans lequel la distance (u, U ; u', U'), dans la direction de mesure (x), entre le premier aimant (2.1 ; 2.1') et le deuxième aimant (2.2 ; 2.2') varie en continu le long de la deuxième direction (y ; y').

6. Dispositif de mesure de position selon l'une quelconque des revendications précédentes, dans lequel un entrefer se trouve entre le conducteur de parois de domaines (1.11 ; 1.11') et les aimants (2.1, 2.2 ; 2.1', 2.2'), ledit entrefer présentant une dimension (G) qui s'étend perpendiculairement à la surface (XY), dans lequel la distance minimale (u ; u') dans la direction de mesure (x) entre le premier aimant (2.1 ; 2.1') et le deuxième aimant (2.2 ; 2.2') est inférieure à la moitié de la dimension (G) de l'entrefer.

7. Dispositif de mesure de position selon l'une quelconque des revendications précédentes, dans lequel les aimants (2.1, 2.2 ; 2.1', 2.2') sont disposés les uns à la suite des autres dans la direction de mesure (x) de telle sorte qu'ils ne se touchent pas.

8. Dispositif de mesure de position selon l'une quelconque des revendications précédentes, dans lequel les groupes de composants (1, 2 ; 1', 2') sont disposés de manière à pouvoir tourner les uns par rapport aux autres autour d'un axe (A), et la surface (XY) dans laquelle s'étend le conducteur de parois de domaines (1.11 ; 1.11') n'est pas coupée par l'axe (A).

9. Dispositif de mesure de position selon l'une quelconque des revendications précédentes, dans lequel le conducteur de parois de domaines (1.11 ; 1.11') présente un tracé non fermé.

10. Dispositif de mesure de position selon l'une quelconque des revendications précédentes, dans lequel le conducteur de parois de domaines (1.11 ; 1.11') présente une dimension maximale (C) dans la direction de mesure (x) qui est inférieure à la longueur de l'un des aimants (2.1, 2.2 ; 2.1', 2.2') s'étendant dans la direction de mesure (x).

11. Dispositif de mesure de position selon l'une quelconque des revendications précédentes, dans lequel le conducteur de parois de domaines (1.11 ; 1.11') présente une dimension maximale (H) dans la deuxième direction (y ; y') qui est inférieure à la largeur (W) de l'un des aimants (2.1, 2.2 ; 2.1', 2.2') s'étendant également dans la deuxième direction (y ; y').

12. Dispositif de mesure de position selon l'une quelconque des revendications précédentes, dans lequel le matériau d'au moins l'un des aimants (2.1, 2.2 ; 2.1', 2.2') comprend une matière plastique contenant une charge magnétisable.

13. Dispositif de mesure de position selon l'une quelconque des revendications précédentes, dans lequel les contours des extrémités opposées des aimants (2.1, 2.2 ; 2.1', 2.2') sont conçus de manière à enter une symétrie spéculaire par rapport à un axe de symétrie (y ; y') orienté parallèlement à la deuxième direction (y ; y').

14. Dispositif de mesure de position selon l'une quelconque des revendications précédentes, dans lequel les aimants (2.1', 2.2') sont conçus de manière identique.
